# EUROPEAN PATENT SPECIFICATION

(11) **EP 3 982 709 B1**
(45) Date of publication and mention of the grant of the patent: **14.05.2025**
(21) Application number: 20716213.2
(22) Date of filing: 17.03.2020
(51) Int. Cl.: A01B 79/00, G06Q 50/02

(54) **METHODS OF OPERATING TILLAGE IMPLEMENTS AND WORKING FIELDS**
VERFAHREN ZUM BETRIEB VON BODENBEARBEITUNGSGERÄTEN UND BEARBEITEN VON FELDERN
PROCÉDÉS DE FONCTIONNEMENT D'OUTILS DE TRAVAIL DU SOL ET DE TRAVAIL DE CHAMPS

(30) Priority: 13.06.2019 US 201962860991 P
(43) Date of publication of application: 20.04.2022
(73) Proprietor: Agco Corporation, Duluth, Georgia 30096 (US)
(72) Inventor: CORPSTEIN, Keith Robert, Hesston, Kansas 67062 (US)
(74) Representative: AGCO Intellectual Property Department
(86) International application number: PCT/IB2020/052420
(87) International publication number: WO 2020/250044

(56) References cited:
- WO-A1-2016/154482
- WO-A2-2014/026183
- US-A1- 2014 278 233
- US-A1- 2015 066 932
- US-A1- 2015 296 701
- US-A1- 2018 310 474

## Description

### FIELD

Embodiments of the present disclosure relate to working agricultural fields. More particularly, embodiments of the present disclosure relate to methods for adjusting tillage implements based on maps.

### BACKGROUND

Crop yields are affected by a variety of factors, such as seed placement, soil quality, weather, irrigation, and nutrient applications. Soil quality is affected by the amount of residue left on the surface of the soil at the end of a growing season and after tilling. As used herein, the term "residue" means plant material that is not mixed into soil. Residue may be used to control erosion, moisture in the soil, temperature of the soil, and other properties.

In some fields and with some crops, it is desirable to keep the amount of residue in a given area relatively constant. In other circumstances, it may be desirable to vary the amount of residue in a given area (*e.g.,* based on slope, soil type, water table, *etc*.). However, the amount of residue can vary based on a number of factors, and it is difficult to correct for different factors without making adjustments to tilling parameters in the field, which is difficult for a farmer to do precisely. US 2015/066932 discloses a method of monitoring yield data during harvest, and improving the monitoring by correlating to planting data.

### BRIEF SUMMARY

In accordance with an aspect if the invention, there is provided a method of operating a tillage implement as defined in claim 1. Further optional features of the method according to this aspect of the invention are set out in the claims dependent on claim 1.

In accordance with a further aspect of the invention, there is provided a non-transitory computer-readable storage media as defined in claim 12.

### BRIEF DESCRIPTION OF THE DRAWINGS

While the specification concludes with claims particularly pointing out and distinctly claiming what are regarded as embodiments of the present disclosure, various features and advantages of embodiments of the disclosure may be more readily ascertained from the following description of example embodiments of the disclosure when read in conjunction with the accompanying drawings, in which:
FIG. 1 is a simplified top view of a map of a field with a combine harvester operating therein;
FIG. 2 illustrates a map that may be generated and used in methods disclosed herein;
FIG. 3 illustrates a tractor pulling a tillage implement in accordance with one embodiment;
FIG. 4 is a simplified flow chart illustrating an example method of working a field;
FIG. 5 is a simplified flow chart illustrating another example method of working a field according to an aspect of the invention; and
FIG. 6 illustrates an example computer-readable storage medium comprising processor-executable instructions configured to embody one or more of the methods of working a field, such as the methods illustrated in FIG. 4 and FIG. 5.

### DETAILED DESCRIPTION

The illustrations presented herein are not actual views of any particular harvester, tillage implement, or portion thereof, but are merely idealized representations that are employed to describe example embodiments of the present disclosure. Additionally, elements common between figures may retain the same numerical designation.

The following description provides specific details of embodiments of the present disclosure in order to provide a thorough description thereof. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. Also note, the drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method acts, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "about" used in reference to a given parameter is inclusive of the stated value and has the meaning dictated by the context (*e.g.,* it includes the degree of error associated with measurement of the given parameter).

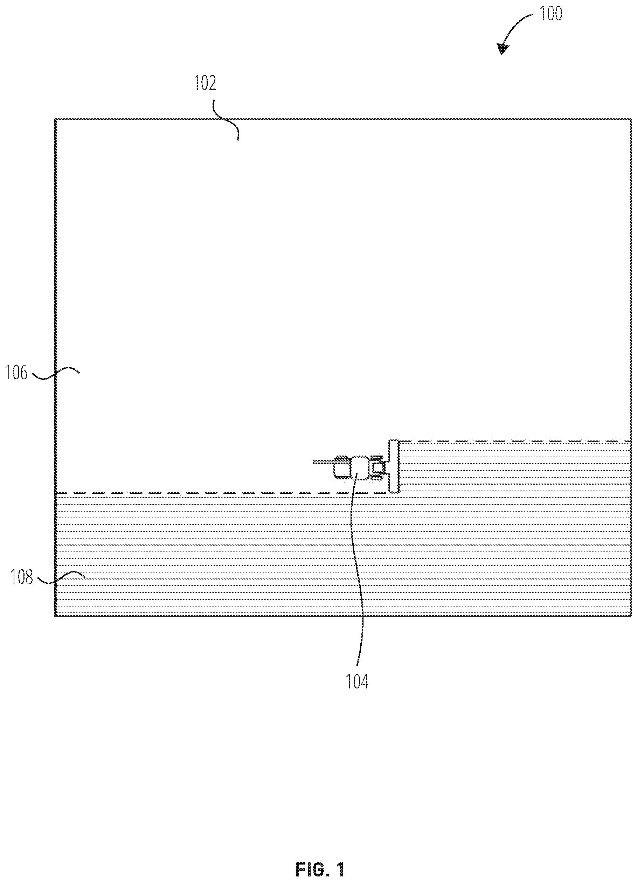

FIG. 1 is a simplified representation of a map 100 of a field 102. A combine 104 is illustrated working the field 102 (*i.e.,* by harvesting crops in the field 102). The field 102 is depicted as having a harvested area 106 and an unharvested area 108.

As the combine 104 traverses the field 102 (i.e., harvesting a crop), sensors carried thereon may collect data about the conditions of the field 102. For example, the combine 104 may collect data about the amount of crop harvested, the amount of MOG (material other than grain) expelled from the combine 104 onto the field 102, or data about the soil conditions, such as water content, color, particle size, *etc.* The data collected by the combine 104 may be correlated to locations on the map 100, such as by matching the collected data to information about a location from a GPS receiver carried by the combine 104. The collected data may be stored after harvesting for use in a subsequent growing season.

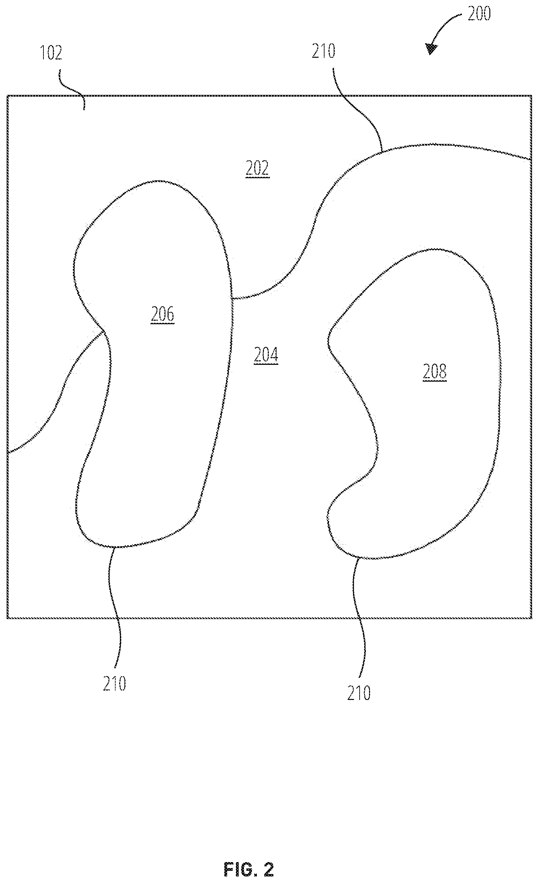

FIG. 2 is a simplified representation of a map 200 of the field 102. The map 200 may include different areas 202-208 separated by boundaries 210. The areas 202-208 may be defined to have different residue amounts, soil characteristics, topographies, or any other property. The map 200 may include any number of areas 202-208 with any selected classifications of properties. The map 200 may be generated based on the data collected by the combine 104 (FIG. 1), and may include operating parameters for a tillage implement to be used to work the field 102. The areas 202-208 may be defined to have different seed varieties or seed populations planted therein.

Generation of maps of fields is described generally in U.S. Patent Application Publication 2002/0022929 A1, "System and Method for Creating Field Attribute Maps for Site-Specific Farming," published February 21, 2002; U.S. Patent 6,606,542, "System and Method for Creating Agricultural Decision and Application Maps for Automated Agricultural Machines," issued August 12, 2003; and International Patent Publication WO 2018/080979 A1, "Land Mapping and Guidance System," published May 3, 2018.

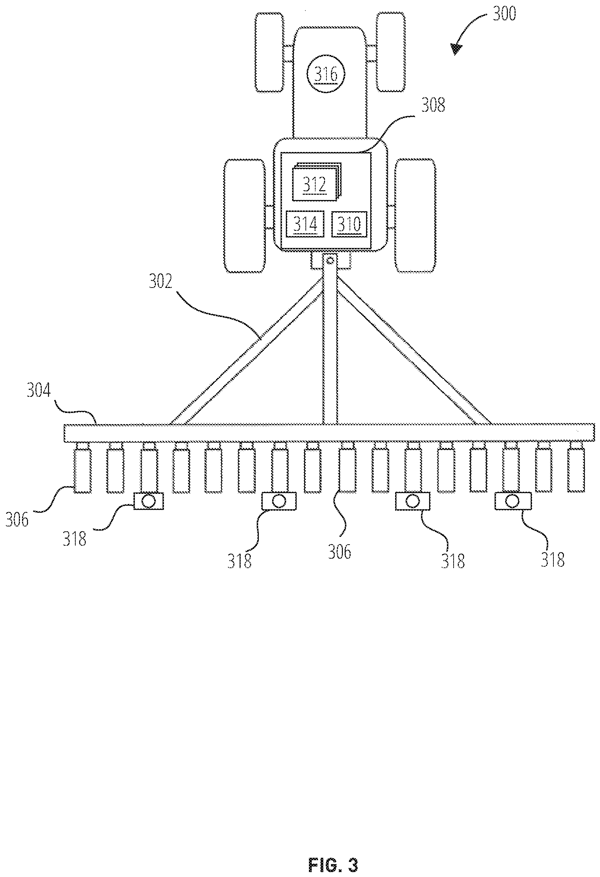

FIG. 3 illustrates a tractor 300 drawing tillage implement 302, which includes a draw bar 304 supporting tilling assemblies 306. A computer 308, which may include a central processing unit ("CPU") 310, memory 312, implement controller 314, and graphical user interface ("GUI") *(e.g.,* a touch-screen interface), is typically located in the cab of the tractor 300. A global positioning system ("GPS") receiver 316 may be mounted to the tractor 300 and connected to communicate with the computer 308. The computer 308 may include an implement controller 314 configured to communicate with the tilling assemblies 306 and/or the GPS receiver 316, such as by wired or wireless communication.

The tilling assemblies 306 may be any of a variety of tools, such as those described in U.S. Patent Application Publication 2016/0183445, "Rotary Spider Tine for Tillage Implement," published June 30, 2016; U.S. Patent Application Publication 2013/0192855, "Interlocking Basket for Strip Tillage Machine," published August 1, 2013; and U.S. Patent Application Publication 2014/0054051, "Implement with Raisable Soil-Leveling Cylinders," published February 27, 2014.

The CPU 310 may use the map 200 (FIG. 2), which may be stored in the memory 312, to determine an operating parameter of the tillage implement 302 at the location of the tillage implement 302 within the field 102. The implement controller 314 may control the tillage implement 302 such that the tilling assemblies 306 each work the soil in the field 102 at a selected depth at each location within the field 102. The operating parameter may be adjusted as the tillage implement 302 traverses the field 102 based on the map 200 and the location of the tillage implement 302 within the field 102. For example, the operating parameter may be adjusted when the tillage implement 302 crosses a boundary 210.

In some embodiments, the depth of the tilling assemblies 306 may be set by the implement controller 314, though the tilling assemblies 306 may not be individually adjusted by the implement controller 314. In such embodiments, contours of the ground may prevent the tilling assemblies 306 from all operating at the same depth. In other embodiments, the tilling assemblies 306 may be individually adjusted. The tilling assemblies 306, the tillage implement 302, and the tractor 300 may have other parameters that may also be adjusted, such as a gang angle, a gang depth, an implement depth, a shank depth, a time delay, a data-filtering parameter, a finishing tool pressure, a finishing tool angle, a hitch draft load, a wheel load, a vehicle speed, *etc.* The tilling assemblies 306 may operate to cut, chop, grind, scrape, or otherwise manipulate the soil and residue as the tractor 300 and the tillage implement 302 traverse the field. In some embodiments, the tillage implement 302 may be configured to collect a portion of the residue. In other embodiments, the tilling assemblies 306 may mix a portion of the residue with the soil, such that the residue is under the surface of the ground. The depth of the tilling assemblies 306 may affect the amount of the residue that remains on top of the soil (as opposed to mixed into the soil or collected by the tillage implement 302.

The draw bar 304 may also carry one or more sensors 318 oriented to measure a property of the field 102 in which the tractor 300 operates. The sensors 318 may be configured to measure visible, ultraviolet (UV), and/or infrared (IR) radiation; moisture levels; soil composition; particle size; residue; *etc.* Each of the sensors 318 may be oriented such that they measure the ground behind the tilling assemblies 306 in the direction of travel of the tractor 300.

Information from the sensors 318 may be transmitted to the computer 308, which may use the information to determine whether the operating parameters indicated on the map 200 are adequate to achieve a selected result with respect to the soil conditions after the tillage implement 302 works the ground *(e.g.,* a selected amount of residue on the ground surface).

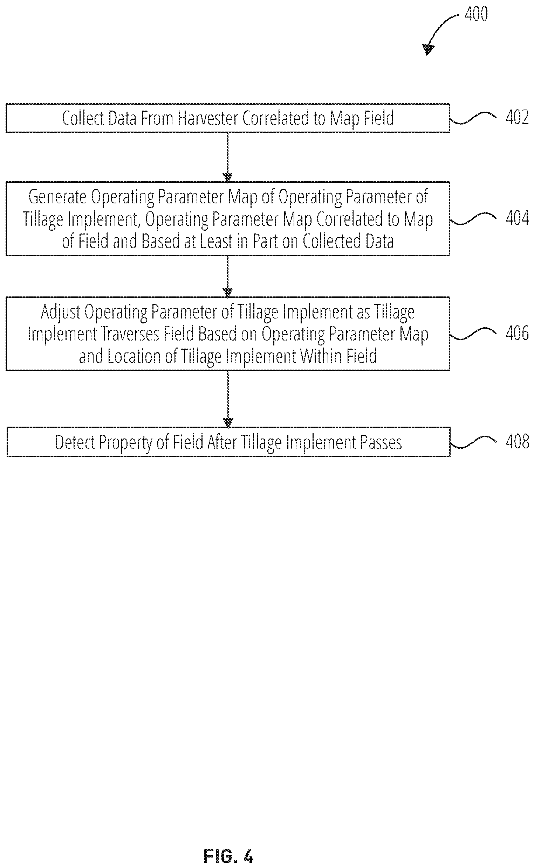

FIG. 4 is a simplified flow chart illustrating a method 400 of working a field, such as the field 102 shown in FIG. 1 and FIG. 2. As shown in block 402, a harvester (e.g., the combine 104) collects data correlated to a map a field. The collected data includes information about the yield *(e.g.,* mass of grain harvested) or the MOG *(e.g.,* mass of material processed by the harvester and returned to the field).

In block 404, an operating parameter map *(e.g.,* the map 200) of an operating parameter of a tillage implement is generated. The operating parameter map is correlated to the map of the field and based at least in part on the collected data. The operating parameter map may be generated by a computer associated with the harvester, a computer associated with the tillage implement, or another computer. The harvester may transfer the collected data to a computer associated with the tillage implement, either directly or indirectly, and either before or after generating the operating parameter map. In some embodiments, the operating parameter map may be generated by a computer remote from the field *(e.g.,* a computer on the Internet that receives the collected data from the harvester and transmits the operating parameter map to the tillage implement).

In block 406, the operating parameter of the tillage implement is adjusted as the tillage implement traverses the field based on the operating parameter map and a location of the tillage implement within the field.

In block 408, the tillage implement optionally detects a property of the field after the tillage implement passes. For example, the sensors 318 (FIG. 3) may detect one or more properties as discussed above. The computer 308 may adjust the operating parameter of the tillage implement based on the property detected. That is, the sensors 318 may provide feedback to the computer 308 to assist the computer 308 in adjusting the operating parameter responsive both to actual current field conditions and the operating parameter map generated based on the data collected during harvest. In some embodiments, the tillage implement may capture an image of the field, and may use the captured image to determine the amount of residue on the ground surface. If the amount of residue detected is different than a selected amount, the operating parameter map may be adjusted accordingly (e.g., offset by an amount to correct for the difference and maintain a selected amount of residue). Thus, the sensors 318 may assist the computer 308 in making fine-tune adjustments to the operating parameter to achieve a selected result.

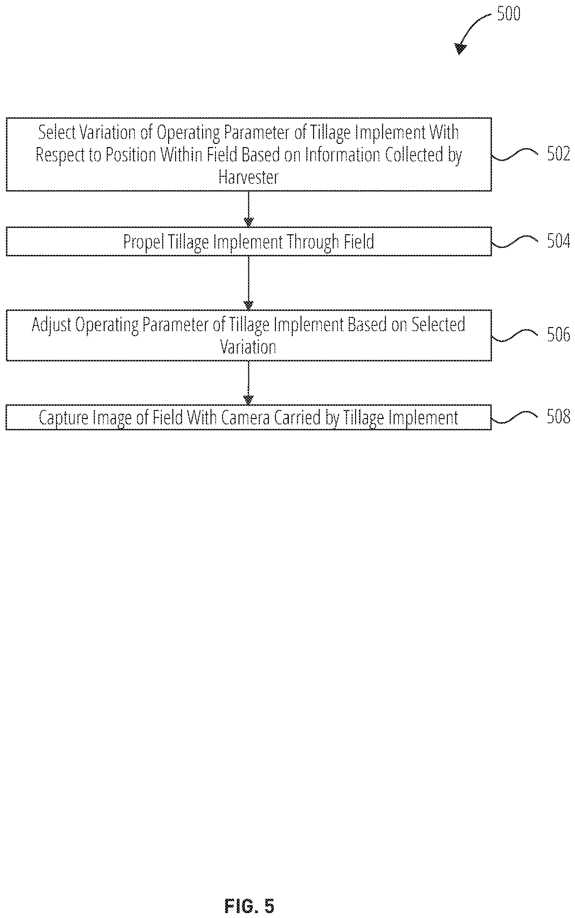

FIG. 5 is a simplified flow chart illustrating another method 500 of working a field, such as the field 102 shown in FIG. 1 and FIG. 2.

In block 502, a variation of an operating parameter of a tillage implement is selected with respect to a position within the field based on information collected by a harvester. Typically, the variation is based on a map of the field *(e.g.,* the map 200), and may be selected by a computer program configured to model operation of the tillage implement.

In block 504, the tillage implement is propelled through the field, such as by dragging the tillage implement behind a tractor or another vehicle. In block 506, the operating parameter of the tillage implement is adjusted based on the selected variation as the tillage implement travels through the field. For example, the operating parameter to be adjusted may be a gang angle, a gang depth, an implement depth, a shank depth, a time delay, a data-filtering parameter, a finishing tool pressure, a finishing tool angle, a hitch draft load, a wheel load, and/or a vehicle speed.

In block 508, a camera carried by the tillage implement may optionally capture an image of the field. The image may be captured at the rear of the tillage implement, and may be an image of the ground surface just after working by the tillage implement. The captured image may depict visible light, ultraviolet radiation, infrared radiation, or any combination thereof. The image may be used to identify residue on the ground surface, such as MOG. For example, a computer associated with the tillage implement may determine an amount of residue on the surface of the field. The computer may then adjust the operating parameter of the tillage implement. In some embodiments, the computer may modify the variation of the operating parameter based on the image *(e.g.,* the computer may apply an offset to the variation based on the map). Though described with respect to capturing an image, the process may be performed with any type of information collected by the tillage implement, including combinations of different types of data *(e.g.,* an image plus a measure of soil moisture).

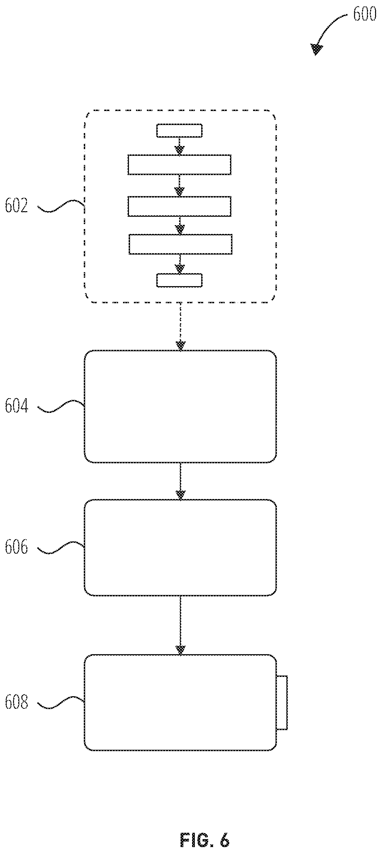

Still other embodiments involve a computer-readable storage medium (e.g., a non-transitory computer-readable storage medium) having processor-executable instructions configured to implement one or more of the techniques presented herein. An example computer-readable medium that may be devised is illustrated in FIG. 6, wherein an implementation 600 includes a computer-readable storage medium 602 *(e.g.,* a flash drive, CD-R, DVD-R, application-specific integrated circuit (ASIC), field-programmable gate array (FPGA), a platter of a hard disk drive, *etc.),* on which is computer-readable data 604. This computer-readable data 604 in turn includes a set of processor-executable instructions 606 configured to operate according to one or more of the principles set forth herein. In some embodiments, the processor-executable instructions 606 may be configured to cause the computer 308 (FIG. 3) to perform operations 608 when executed via a processing unit, such as at least some of the example method 400 depicted in FIG. 4 or the method 500 depicted in FIG. 5. In other embodiments, the processor-executable instructions 606 may be configured to implement a system, such as at least some of the example tractor 300 and tillage implement 302 of FIG. 3. Many such computer-readable media may be devised by those of ordinary skill in the art that are configured to operate in accordance with one or more of the techniques presented herein.

The tractor 300 and tillage implement 302 disclosed herein may be used in conjunction with plowing a field in preparation for planting, or at the end of a growing season. By adjusting tilling parameters, the overall yield of the field may be increased because soil may be tilled such that the properties of the soil are conducive to the crop to be grown in the field. For example, the properties of the soil may be selected to protect the soil from erosion, nutrient loss, and moisture loss.

While the present invention has been described herein with respect to certain illustrated embodiments, those of ordinary skill in the art will recognize and appreciate that it is not so limited. Rather, many additions, deletions, and modifications to the illustrated embodiments may be made without departing from the scope of the claims. Further, embodiments of the disclosure have utility with different and various implement types and configurations.

## Claims

1. A method of operating a tillage implement (302), the method **characterized by**:
selecting a variation of an operating parameter of a tillage implement with respect to a position within a field (102) based on information collected by a harvester (104) relating to an amount of grain harvested or an amount of material other than grain processed and returned to the field by the harvester;
propelling the tillage implement through the field; and
adjusting the operating parameter of the tillage implement based on the selected variation.

2. The method of claim 1, further comprising capturing an image of the field with a camera carried by the tillage implement.

3. The method of claim 2, wherein capturing an image of the field comprises capturing visible light.

4. The method of claim 2 or claim 3, wherein capturing an image of the field comprises capturing infrared radiation.

5. The method of claim 2 or claim 3, further comprising identifying residue in the image.

6. The method of claim 5, wherein identifying residue in the image comprises determining an amount of residue on a surface of the field.

7. The method of claim 5, wherein identifying residue in the image comprises identifying material other than grain.

8. The method of claim 2 or claim 3, further comprising further adjusting the operating parameter of the tillage implement based on the image.

9. The method of claim 2 or claim 3, further comprising modifying the variation of the operating parameter based on the image.

10. The method of any one of claims 1 through 3, wherein adjusting an operating parameter of the tillage implement (302) comprises adjusting the operating parameter to maintain a selected amount of residue on a ground surface.

11. The method of any one of claims 1 through 3, wherein adjusting an operating parameter of the tillage implement (302) comprises adjusting at least one parameter selected from the group consisting of a gang angle, a gang depth, an implement depth, a shank depth, a time delay, a data-filtering parameter, a finishing tool pressure, a finishing tool angle, a hitch draft load, a wheel load, and a vehicle speed.

12. A non-transitory computer-readable storage medium (602), **characterized by** the computer-readable storage medium including instructions that when executed by a computer connected to communicate with a tillage implement (302), cause the tillage implement to perform the method of claim 1.

## Patentansprüche

1. Verfahren zum Betreiben eines Bodenbearbeitungsgeräts (302), **wobei** das Verfahren **gekennzeichnet ist durch**:
ein Auswählen einer Variation eines Betriebsparameters eines Bodenbearbeitungsgeräts mit Bezug auf eine Position auf einem Feld (102) basierend auf **durch** eine Erntemaschine (104) gesammelten Informationen, die eine Menge von geerntetem Getreide oder eine Menge von anderem Material als Getreide, welches von der Erntemaschine verarbeitet und zurück auf das Feld gegeben wird, betreffen;
ein Antreiben des Bodenbearbeitungsgerätes über das Feld; und
ein Einstellen des Betriebsparameters des Bodenbearbeitungsgeräts basierend auf der ausgewählten Variation.

2. Verfahren nach Anspruch 1, **weiterhin** mit einem Aufnehmen eines Bilds des Felds mit einer von dem Bodenbearbeitungsgerät getragenen Kamera.

3. Verfahren nach Anspruch 2, **wobei** das Aufnehmen eines Bilds des Felds ein Aufnehmen von sichtbarem Licht aufweist.

4. Verfahren nach Anspruch 2 oder Anspruch 3, **wobei** das Aufnehmen eines Bilds des Felds ein Aufnehmen von Infrarotstrahlung aufweist.

5. Verfahren nach Anspruch 2 oder Anspruch 3, **weiterhin** mit einem Identifizieren von Rückstand in dem Bild.

6. Verfahren nach Anspruch 5, **wobei** das Identifizieren von Rückstand in dem Bild ein Bestimmen einer Menge von Rückstand auf einer Oberfläche des Felds aufweist.

7. Verfahren nach Anspruch 5, **wobei** das Identifizieren von Rückstand in dem Bild ein Identifizieren von anderem Material als Getreide aufweist.

8. Verfahren nach Anspruch 2 oder Anspruch 3, **weiterhin** mit einem weiteren Einstellen des Betriebsparameters des Bodenbearbeitungsgeräts basierend auf dem Bild.

9. Verfahren nach Anspruch 2 oder Anspruch 3, **weiterhin** mit einem Modifizieren der Variation des Betriebsparameters basierend auf dem Bild.

10. Verfahren nach einem der Ansprüche 1 bis 3, **wobei** das Einstellen eines Betriebsparameters des Bodenbearbeitungsgeräts (302) ein Einstellen des Betriebsparameters aufweist, um eine ausgewählte Menge von Rückstand auf einer Bodenoberfläche zu belassen.

11. Verfahren nach einem der Ansprüche 1 bis 3, **wobei** das Einstellen eines Betriebsparameters des Bodenbearbeitungsgeräts (302) ein Einstellen mindestens eines Parameters aufweist, der aus einer Gruppe ausgewählt ist, welche aus einem Gangwinkel, einer Gangtiefe, einer Gerätetiefe, einer Schafttiefe, einer Zeitverzögerung, einem Daten-filternden Parameter, einem Endbearbeitungswerkzeugdruck, einem Endbearbeitungswerkzeugwinkel, einer Anhängezuglast einer Radlast und einer Fahrzeuggeschwindigkeit besteht.

12. Nichtflüchtiges computerlesbares Speichermedium (602), **dadurch gekennzeichnet, dass** das computerlesbare Speichermedium Instruktionen umfasst, die wenn sie durch einen Computer ausgeführt werden, der verbunden ist, um mit einem Bodenbearbeitungsgerät (302) zu kommunizieren, das Bodenbearbeitungsgerät veranlassen, das Verfahren nach Anspruch 1 auszuführen.

## Revendications

1. Procédé de commande d'un outillage de labourage (302) le procédé étant **caractérisé par** :
la sélection d'une variation d'un paramètre de fonctionnement d'un outillage de labourage par rapport à une position dans un champ (102) sur la base d'informations collectées par une moissonneuse (104) qui se rapportent à une quantité de grain moissonnée ou à une quantité de matière autre que du grain traitée et renvoyée dans le champ par la moissonneuse ;
la propulsion de l'outillage de labourage à travers le champ ; et
le réglage du paramètre de fonctionnement de l'outillage de labourage sur la base de la variation sélectionnée.

2. Procédé selon la revendication 1, comprenant, en outre, la capture d'une image du champ avec une caméra supportée par l'outillage de labourage.

3. Procédé selon la revendication 2, dans lequel la capture d'une image du champ comprend la capture en lumière visible.

4. Procédé selon la revendication 2 ou 3, dans lequel la capture d'une image du champ comprend la capture en rayonnement infrarouge.

5. Procédé selon la revendication 2 ou 3, comprenant, en outre, l'identification de résidus sur l'image.

6. Procédé selon la revendication 5, dans lequel l'identification de résidus sur l'image comprend la détermination d'une quantité de résidus sur une surface du champ.

7. Procédé selon la revendication 5, dans lequel l'identification de résidus sur l'image comprend l'identification de matière autre que du grain.

8. Procédé selon la revendication 2 ou 3, comprenant, en outre, le réglage supplémentaire du paramètre de fonctionnement de l'outillage de labourage sur la base de l'image.

9. Procédé selon la revendication 2 ou 3, comprenant, en outre, la modification de la variation du paramètre de fonctionnement sur la base de l'image.

10. Procédé selon l'une quelconque des revendications 1 à 3, dans lequel le réglage d'un paramètre de fonctionnement de l'outillage de labourage (302) comprend le réglage du paramètre de fonctionnement de manière à maintenir une quantité de résidus sélectionnée sur une surface du sol.

11. Procédé selon l'une quelconque des revendications 1 à 3, dans lequel le réglage d'un paramètre de fonctionnement de l'outillage de labourage (302) comprend le réglage d'au moins un paramètre sélectionné à partir du groupe constitué par un angle de groupe, une profondeur de groupe, une profondeur d'outillage, une profondeur de tige, un délai, un paramètre de filtrage de données, une pression d'outil de finition, un angle d'outil de finition, une charge d'entraînement d'attelage, une charge de roue et une vitesse de véhicule.

12. Support de mémorisation non transitoire (602) pouvant être lu par un ordinateur, **caractérisé par le fait que** le support de mémorisation pouvant être lu par un ordinateur comporte des instructions qui, lorsqu'elles sont exécutées par un ordinateur couplé de manière à communiquer avec un outillage de labourage (302), conduisent l'outillage de labourage à exécuter le procédé selon la revendication 1.
